# DEMANDE DE BREVET EUROPEEN

(11) **EP 2 007 111 A1**
(43) Date de publication de la demande: **24.12.2008**
(21) Numéro de dépôt: 08158462.5
(22) Date de dépôt: 18.06.2008
(51) Int. Cl.: H04L 29/06

(54) **Procédé de filtrage de paquets en provenance d'un réseau de communication**

(30) Priorité: 22.06.2007 FR 0755944
(71) Demandeur: France Télécom, 75015 Paris (FR)
(72) Inventeur: Kassi-Lahlou, Mohamed, 14790 Fontaine Etoupefour (FR); Mansour, Jade, 92220 Bagneux (FR); Michel M. Jean-Charles, 75015 Paris (FR)

(57) **Abrégé**

Procédé de filtrage de paquets en provenance d'un réseau (1) de communication, comprenant, suite à un enregistrement réussi d'un terminal (20) auprès d'une plateforme de service (32) :
- une étape d'association d'un contexte d'enregistrement au terminal, le contexte comprenant des informations d'enregistrement transmises entre le terminal et la plateforme de service durant l'enregistrement ;
- une étape de création d'au moins une règle de filtrage à partir du contexte d'enregistrement, ladite règle visant à bloquer les paquets ne satisfaisant pas au moins une partie des informations d'enregistrement ;
- une étape de filtrage des paquets en fonction de la règle créée.

## Description

L'invention concerne une technique de filtrage de paquets en provenance d'un réseau de communication.

On se place ici dans le domaine de la protection d'une plateforme de service par un dispositif de sécurité, couramment appelé dispositif pare-feu, placé en coupure entre la plateforme de service et un réseau de communication.

Un tel service peut être par exemple un service de la gestion de mobilité IP de terminaux. Le protocole Mobile IP permet de gérer une mobilité d'un terminal ou d'un noeud IP mobile, encore appelé Mobile Node ou MN, depuis un sous-réseau IP d'origine vers un autre sous-réseau IP, appelé réseau visité, au cours d'un déplacement du noeud.

Un réseau visité peut offrir à des noeuds visiteurs en déplacement d'acquérir une adresse IP valide au niveau topologie. A cet effet, une fonction "Agent étranger" ou "Foreign Agent" en anglais, ou encore FA, peut être prévue dans le réseau visité sur un équipement donné. Cette fonction permet d'enregistrer des noeuds mobiles visiteurs et d'offrir des fonctions de retransmission des paquets vers ces derniers. Lorsqu'un noeud se déplace vers un réseau visité comprenant un agent étranger FA, il acquiert auprès de l'agent étranger FA une adresse temporaire dans ce réseau visité, cette adresse étant classiquement appelée CoA pour "Care-of Address". Une seule adresse temporaire peut être utilisée pour l'ensemble des noeuds visiteurs. Le noeud mobile MN en déplacement dans le réseau visité s'enregistre ensuite auprès d'un équipement référent de son réseau IP d'origine, ayant pour rôle de gérer la mobilité IP, et lui indique cette adresse temporaire dans le réseau visité. Un tel équipement référent est appelé classiquement un agent mère ou "Home Agent" en anglais, ou encore HA. Tout noeud IP a ou obtient, lors de l'enregistrement auprès de son agent mère, une adresse, HoA pour "Home Adress" en anglais, dans son réseau IP d'origine. L'agent mère mémorise la correspondance entre l'adresse HoA dans le réseau d'origine et l'adresse temporaire CoA dans le réseau visité. Le noeud mobile MN en déplacement dans le réseau visité peut ainsi recevoir à l'adresse temporaire CoA des paquets destinés à l'adresse HoA dans le réseau d'origine. Il peut également émettre des paquets depuis l'adresse temporaire CoA de sorte qu'ils semblent être émis depuis l'adresse HoA dans le réseau d'origine.

Dans un réseau visité ne comprenant pas un agent étranger FA, le noeud mobile acquiert une adresse temporaire personnelle dans le réseau visité, appelée "Co-Located Care Of Address" ou CCoA, et l'enregistrement auprès de l'agent mère s'effectue tel que décrit précédemment.

Afin d'éviter que les paquets transmis par le noeud en déplacement depuis le réseau visité ne soient rejetés en raison d'une adresse IP source considérée comme incorrecte dans le réseau visité, on peut établir un tunnel entre l'agent étranger FA et l'agent mère HA, ou entre le noeud en déplacement et l'agent mère si le réseau visité n'a pas d'agent étranger FA. Les paquets transmis par le noeud mobile MN sont alors transmis à l'agent mère HA dans le tunnel. L'agent mère HA a ensuite la charge de les transmettre au destinataire.

De façon classique, on protège l'équipement référent ou agent mère à l'aide d'un pare-feu. Le pare-feu applique des règles de filtrage prédéfinies, permettant de bloquer au moins une partie du trafic indésirable entrant. Ces règles sont génériques et visent à filtrer notamment le trafic entrant en provenance d'un réseau de communication donné. Elles permettent le passage sélectif de certains flux de données. A titre d'exemples illustratifs, on peut citer les règles suivantes :
- une première règle consiste à laisser passer les demandes d'enregistrement en provenance d'une adresse IP valide et à destination de l'agent mère ;
- une deuxième règle consiste à laisser passer le trafic correspondant à des paquets transmis dans un tunnel en provenance d'une adresse IP valide et à destination de l'agent mère;
- une troisième règle consiste à laisser passer le trafic à destination d'une adresse dans le réseau d'origine, cette adresse appartenant à un ensemble d'adresses géré par l'équipement référent.

Il est toutefois possible à un équipement malveillant de contourner ces règles et d'utiliser des paramètres valides, notamment en vue d'une attaque contre l'agent mère.

Il existe donc un besoin d'une technique permettant d'améliorer la protection d'un équipement référent.

L'invention répond à ce besoin en proposant un procédé de filtrage de paquets en provenance d'un réseau de communication, comprenant, suite à un enregistrement réussi d'un terminal auprès d'une plateforme de service :
- une étape d'association d'un contexte d'enregistrement au terminal, le contexte comprenant des informations d'enregistrement transmises entre le terminal et la plateforme de service durant l'enregistrement ;
- une étape de création d'au moins une règle de filtrage à partir du contexte d'enregistrement, ladite règle visant à bloquer les paquets ne satisfaisant pas au moins une partie des informations d'enregistrement;
- une étape de filtrage des paquets en fonction de la règle créée.

Ainsi, grâce à l'invention, on crée de façon dynamique des règles spécifiques de filtrage en fonction des terminaux enregistrés auprès de la plate-forme de service. Les règles étant créées à partir d'un contexte d'enregistrement comprenant des informations d'enregistrement, elles sont adaptées au trafic susceptible de se présenter en provenance d'un réseau de communication. Le contexte d'enregistrement et les règles associées sont uniquement créées lorsque l'enregistrement auprès du service est effectué avec succès et le contexte prend en compte des informations issues aussi bien de la requête d'enregistrement transmise par le terminal que dans la réponse de la plateforme de service à destination du terminal. Ainsi, si un paramètre n'est alloué au terminal qu'une fois son enregistrement réussi, le procédé met à jour le contexte d'enregistrement en fonction de ce nouveau paramètre.

Le procédé peut être mis en oeuvre afin de protéger des plateformes de service tels qu'un service de gestion de mobilité IP de terminaux, un service multimédia de type IMS, un service d'authentification. Il est particulièrement bien adapté au service de gestion de la mobilité en ce que la plateforme de gestion de la mobilité participe à l'acheminement des paquets en provenance et à destination d'un terminal en déplacement, une fois celui-ci enregistré.

En outre, le procédé comprend, préalablement à l'étape de filtrage des paquets en fonction de la règle créée, une étape de filtrage, dans laquelle on bloque des messages définis par un protocole donné à destination de la plateforme de service comprenant un identifiant de service non valide.

Une règle générique de filtrage est appliquée à l'ensemble des messages d'un protocole donné. Ainsi, on bloque des demandes d'enregistrement à destination de la plateforme de service qui ne comprenne pas un identifiant de service valide. Dans l'état de la technique tel qu'exposé précédemment, les demandes d'enregistrement sont filtrées en fonction d'une adresse IP source valide. Ceci nécessite des déclarations complexes et demande des mises à jour régulières. En outre, la protection de la plateforme n'est pas assurée si un attaquant utilise une adresse IP autorisée. De plus, ceci nécessite que le terminal, client du service, obtienne une adresse IP valide avant de joindre la plateforme de service. Pour le service de gestion de la mobilité, si on souhaite par exemple limiter l'ensemble d'adresses allouées à ce service, il est préférable de pouvoir allouer une adresse dans le réseau d'origine uniquement lorsque le terminal souhaite utiliser le service. Ainsi, le terminal demande à s'enregistrer en transmettant au service de gestion de la mobilité son identifiant auprès du service et reçoit en retour une adresse dans le réseau d'origine. Cette adresse sera utilisée par les terminaux entrant en contact avec le terminal en déplacement. Le procédé crée le contexte d'enregistrement à partir des informations d'enregistrement présentes dans la demande d'enregistrement et également dans la réponse. On obtient ainsi des règles spécifiques bien adaptées et permettant de filtrer de façon très performante le trafic en entrée de la plateforme de service.

De plus, une durée de vie, associée à l'enregistrement auprès de la plateforme de service, est associée à la règle de filtrage créée, à l'issue de laquelle ladite règle est supprimée.

De façon générale, une durée de validité est présente dans les messages d'enregistrement échangés. Ainsi, en mémorisant dans le contexte d'enregistrement cette information de durée de vie de l'enregistrement, on supprime les règles de filtrage spécifiques qui n'ont plus d'utilité, l'enregistrement du terminal étant échu.

Dans un mode de réalisation, dans lequel la plateforme de service gère une mobilité d'au moins un terminal appartenant à un réseau d'origine vers des réseaux visités et le contexte d'enregistrement comprend une adresse du terminal dans le réseau d'origine, l'étape de création d'une règle de filtrage visant à bloquer les paquets non émis à partir de l'adresse du terminal dans le réseau d'origine.

En outre, le contexte d'enregistrement comprenant en outre une adresse temporaire du terminal dans un réseau visité, on crée une autre règle de filtrage à partir du contexte d'enregistrement, ladite autre règle visant à bloquer les paquets encapsulés ne comprenant pas en tant qu'adresse source l'adresse temporaire du terminal.

Dans le cas où un tunnel est établi entre le terminal en déplacement et l'agent mère HA, les paquets sont émis encapsulés à partir de l'adresse temporaire du terminal en déplacement et à destination de la plateforme de service et vice-versa. Grâce à l'autre règle spécifique créée associée au contexte, on améliore également la protection de la plateforme de service.

L'invention concerne également une entité de filtrage de paquets en provenance d'un réseau de communication, destinée à protéger une plateforme de service, comprenant :
- des moyens d'association d'un contexte d'enregistrement à un terminal, suite à un enregistrement réussi du terminal auprès de la plateforme de service, le contexte comprenant des informations d'enregistrement transmises entre le terminal et la plateforme de service durant l'enregistrement;
- des moyens de création d'au moins une règle de filtrage à partir du contexte d'enregistrement, ladite règle visant à bloquer les paquets ne satisfaisant pas au moins une partie des informations d'enregistrement;
- des moyens de filtrage des paquets en fonction de règles créées.

De plus, l'invention concerne un système de fourniture de service comprenant :
- une plateforme de service, agencée pour fournir un service à des terminaux d'un réseau d'origine, et
- une entité de filtrage telle que décrite ci-dessus, agencée pour recevoir des paquets en provenance d'un réseau de communication et les filtrer avant transfert à la plateforme de service.

L'invention concerne également :
- un programme pour une entité de filtrage de paquets en provenance d'un réseau de communication, comprenant des instructions de code de programme destinées à commander l'exécution des étapes du procédé tel que décrit ci-dessus, lorsque ledit programme est exécuté par ladite entité, et
- un support d'enregistrement lisible par une entité sur lequel est enregistré le programme pour une entité de filtrage de paquets tel que décrit ci-dessus.

L'invention sera mieux comprise à l'aide de la description suivante d'un mode de réalisation particulier du procédé de l'invention, en référence aux dessins annexés sur lesquels :
- la figure 1 représente un schéma simplifié de réseaux de communication dans le cadre de la mise en oeuvre d'un service de gestion de la mobilité selon un mode particulier de réalisation de l'invention ;
- la figure 2 représente un contexte d'enregistrement associé au service de gestion de la mobilité selon un mode de réalisation de l'invention;
- la figure 3 représente un ensemble de règles de filtrage selon un mode particulier de réalisation de l'invention;
- la figure 4 représente les étapes du procédé tel qu'il est mis en oeuvre à la réception d'un paquet en provenance d'un réseau de communication selon un mode particulier de réalisation de l'invention;
- la figure 5 représente les étapes du procédé tel qu'il est mis en oeuvre à la réception d'un paquet en provenance d'une plateforme de service selon un mode particulier de réalisation de l'invention;
- la figure 6 représente un schéma bloc fonctionnel d'une entité de filtrage de paquets en provenance d'un réseau de communication pour la mise en oeuvre du procédé de l'invention.

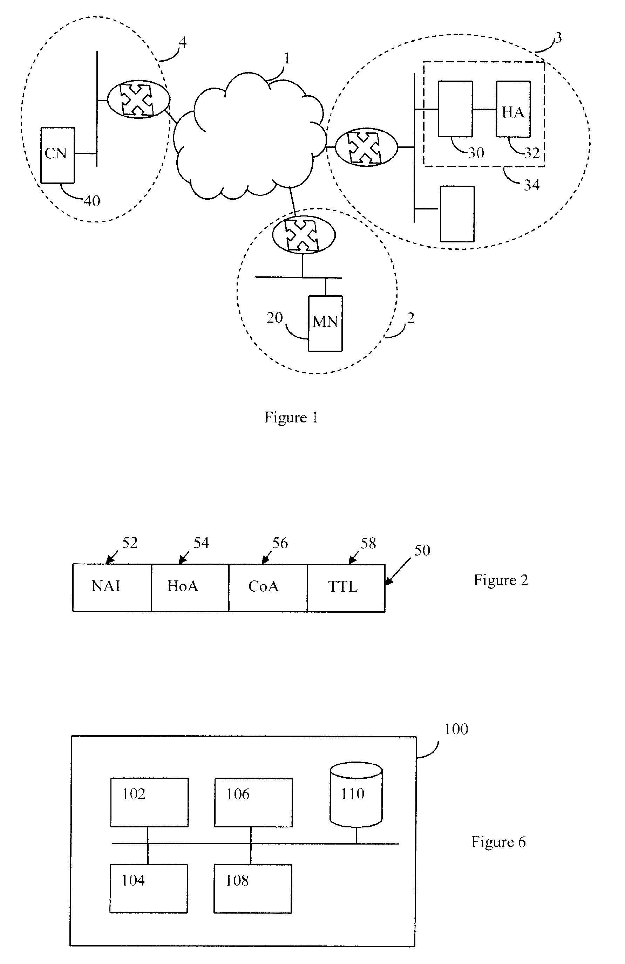

On a représenté sur la figure 1 un réseau de communication 1 par paquets auquel sont connectés d'autres réseaux de communication 2, 3 et 4. Le réseau 3 est appelé par la suite réseau d'origine. Il comprend une entité 30 de filtrage des paquets en provenance du réseau 1 de communication et une plateforme de service de gestion de la mobilité 32, appelée par la suite agent mère ou HA pour "Home Agent". L'entité de filtrage 30 est apte à filtrer les paquets en provenance du réseau de communication 1 en fonction de règles de filtrage définies et mémorisées dans une base de règles 110, telle que représentée sur la figure 6. L'entité de filtrage 30 et la plateforme de service de gestion de la mobilité 32 forment un système 34 de fourniture de service.

Un terminal 20 appartient au réseau d'origine 3 et bénéficie d'un service de gestion de la mobilité lui permettant de changer de réseau IP. Le terminal 20 est apte à mettre en oeuvre une mobilité de réseau IP. Ce service est basé sur le protocole "Mobile IP", principalement défini par le document RFC 3344 pour IPv4 et par le document RFC 3775 pour IPv6. A cet effet, le terminal 20 dispose d'un identifiant de service, et plus précisément en ce qui concerne le service de gestion de la mobilité un identifiant d'accès au réseau ou NAI pour "Network Access Identifier" tel que défini dans la RFC 2486. Sur la figure 1, le terminal 20 est en déplacement et connecté en tant que visiteur dans le réseau de communication 2, appelé par la suite réseau visité. Afin de bénéficier du service de gestion de la mobilité, il est enregistré auprès de la plateforme de service de gestion de la mobilité 32. La procédure d'enregistrement sera détaillée par la suite. Une fois enregistré, le terminal 20 en déplacement possède une adresse dans le réseau d'origine 3, notée HoA pour "Home Address" et une adresse temporaire dans le réseau visité 2, notée CoA pour "Care-Of-Address" dans le cas où la fonction "Agent Etranger" ou "Foreign Agent", noté FA, existe, et CCoA pour "Co-located Care-Of-Address" sinon. Afin de simplifier la description, on se place ici dans le cas où le réseau visité 2 ne comprend pas d'agent étranger FA. Le terminal 20 en déplacement entre en communication avec un terminal correspondant 40 ou CN pour "Correspondant Node" situé dans le réseau de communication 4. Les paquets émis par le terminal correspondant 40 à destination du terminal 20 en déplacement sont envoyés en indiquant comme adresse de destination, l'adresse HoA du terminal dans le réseau d'origine 3. Ces paquets sont acheminés vers l'agent mère, qui les réachemine vers l'adresse temporaire CCoA du terminal 20 en déplacement dans le réseau visité 2. Les paquets émis par le terminal 20 en déplacement à destination du terminal correspondant 40 sont envoyés en indiquant comme adresse source des paquets, l'adresse HoA du terminal 20 en déplacement dans le réseau d'origine 3.

En outre, afin d'éviter que les paquets transmis par le terminal 20 en déplacement depuis le réseau visité 2 ne soient rejetés en raison d'une adresse IP source, c'est-à-dire l'adresse dans le réseau d'origine 3, considérée comme incorrecte dans le réseau visité 2, on peut établir un tunnel entre le terminal 20 en déplacement et l'agent mère 32. Les paquets transmis par le terminal 20 en déplacement à destination du terminal correspondant 40 sont alors transmis à l'agent mère HA 32 dans le tunnel. L'agent mère HA 32 a ensuite la charge de les acheminer au terminal correspondant 40.

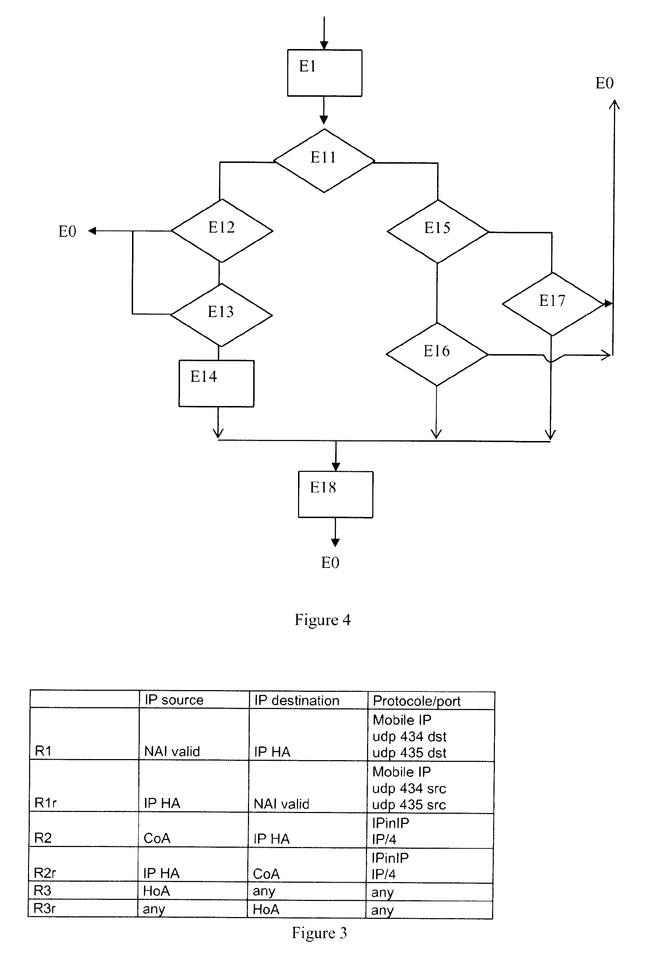

Dans une étape d'initialisation de l'entité de filtrage 30, on définit une règle générique de filtrage R1, telle que représentée sur la figure 3. Cette règle R1 vise à filtrer des messages définis par un protocole donné, Mobile IP, à destination de l'agent mère 32, identifié par son adresse IP, notée IP HA, dans laquelle on bloque les messages de protocole comprenant un identifiant d'accès réseau NAI non valide. On définit ainsi un ensemble d'identifiants d'accès réseau valides, permettant d'identifier l'ensemble des terminaux autorisés à s'enregistrer auprès de l'agent mère 32. De façon plus précise, on définit également les ports UDP ("User Datagramm Protocol") de destination, plus précisément de valeur 434 et 435 pour le service de gestion de la mobilité, auxquels les messages définis par le protocole donné sont susceptibles d'être adressés. Cette règle de filtrage, appelée par la suite, règle de filtrage générique, est mémorisée dans la base de règles 110. Cette règle possède sa réciproque R1r laquelle n'autorise que des messages définis par le protocole donné émis par l'agent mère 32 et à destination d'un identifiant d'accès réseau valide. L'application de cette règle réciproque R1r ne contribue pas, toutefois, à la protection de l'agent mère.

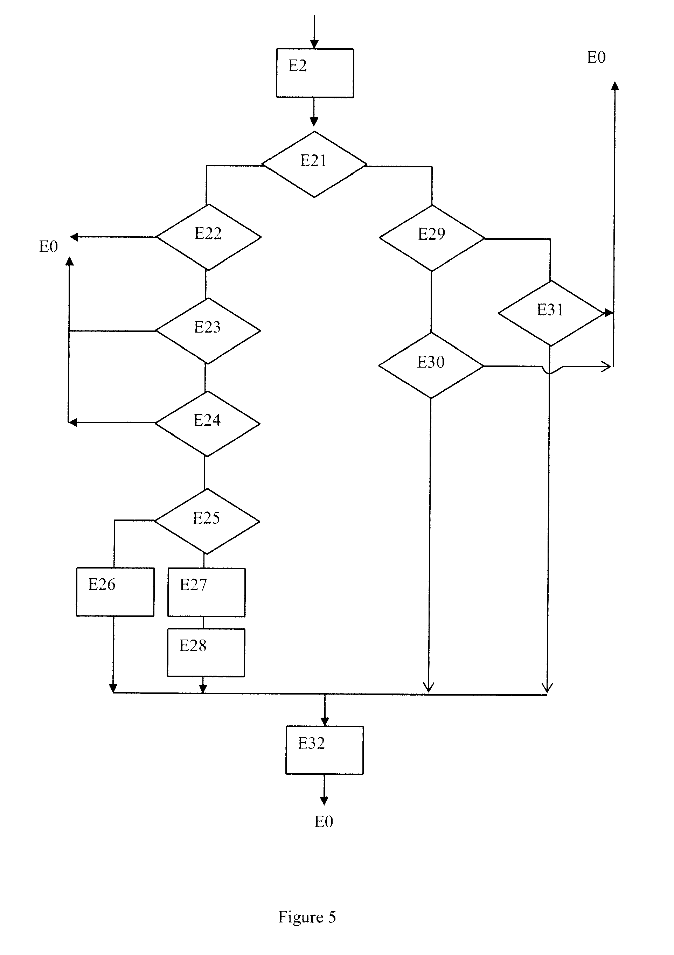

Le procédé passe ensuite à une étape E0, non représentée sur les figures 4 et 5, d'attente de réception d'un paquet en provenance ou à destination de l'agent mère 32.

Nous allons maintenant décrire les étapes du procédé de filtrage, tel qu'il est mis en oeuvre à la réception d'un paquet en provenance du réseau 1 de communication, en relation avec la figure 4.

Dans une première étape E1, on reçoit un paquet P en provenance du réseau de communication 1.

Dans une étape de test E11, on vérifie si le paquet P comprend un message défini par un protocole donné.

Si tel est le cas, on vérifie dans une étape E12, si les critères de la règle générique R1 sont réunis, c'est-à-dire que l'on vérifie qu'il s'agit bien d'un message défini par le protocole Mobile IP à destination de l'adresse IP de l'agent mère 32, "IP HA", et du port UDP 434 ou 435 et qu'il comprend un identifiant d'accès réseau NAI, cet identifiant d'accès appartenant bien à l'ensemble des identifiants d'accès réseau valides, tel que cela est défini dans la règle R1. Si au moins un des critères définis ci-dessus n'est pas vérifié, le procédé bloque le paquet P et repasse à l'étape E0, en attente de réception d'un paquet.

Si l'ensemble des critères est respecté, on vérifie dans une étape E13, s'il s'agit d'un message d'enregistrement auprès de l'agent mère. Si ce n'est pas le cas, le procédé bloque le paquet P et repasse à l'étape E0, en attente de réception d'un paquet.

Si c'est le cas, c'est-à-dire s'il s'agit d'un message d'enregistrement, noté "Registration Request" pour le service de gestion de la mobilité, on associe au terminal 20 en déplacement, dans une étape E14, un contexte d'enregistrement temporaire, comprenant l'identifiant d'accès réseau NAI et l'adresse temporaire CoA du terminal 20 en déplacement dans le réseau visité 2, extraits du message d'enregistrement.

On notera ici que par "contexte d'enregistrement", on entend désigner un ensemble d'informations relatives à l'enregistrement du terminal auprès d'une plateforme de service telle que la plateforme de service de gestion de la mobilité 32. Un contexte d'enregistrement est associé à un terminal, une plateforme de service et un enregistrement particulier du terminal auprès de la plateforme de service. Il comprend des informations d'enregistrement transmises entre le terminal et la plateforme de service durant l'enregistrement.

Si le message d'enregistrement "Registration Request" comprend une adresse HoA du terminal 20 en déplacement dans le réseau d'origine 3, on mémorise dans le contexte d'enregistrement temporaire cette adresse HoA. Le procédé passe ensuite à l'étape E18 de transmission du paquet à l'agent mère 32.

Lors de l'étape E18, le procédé transmet le paquet à l'agent mère 32 et repasse à l'étape E0, en attente de réception d'un paquet en provenance ou à destination de l'agent mère 32.

Si lors de l'étape E11, le résultat est négatif, c'est-à-dire que le paquet ne comprend pas un message défini par un protocole donné, le procédé passe ensuite à une étape E15 de test qui est décrite ultérieurement.

A l'issue des étapes E1-E14 telles que décrites ci-dessus, sur réception d'un paquet P en provenance du réseau de communication, un paquet ne répondant pas aux critères de la règle générique R1 a été filtré et un paquet non bloqué comprenant un message d'enregistrement a permis d'associer au terminal 20 en déplacement un contexte d'enregistrement temporaire.

La finalisation du contexte d'enregistrement, telle qu'elle est effectuée par les différentes étapes du procédé, va maintenant être décrite en relation avec la figure 5.

Dans une étape E2, le procédé reçoit un paquet P en provenance de l'agent mère 32.

Dans une étape de test E21, on vérifie si le paquet P comprend un message défini par un protocole donné.

Si tel est le cas, on vérifie dans une étape E22, si les critères de la règle générique R1 réciproque sont réunis, c'est-à-dire que l'on vérifie qu'il s'agit bien d'un message défini par le protocole Mobile IP en provenance de l'adresse IP de l'agent mère 32, "IP HA", et du port UDP 434 ou 435 et qu'il comprend en tant que destination un identifiant d'accès réseau NAI, cet identifiant d'accès appartenant bien à l'ensemble des identifiants d'accès réseau valides, tel que cela est défini dans la règle R1r. Si au moins un des critères définis ci-dessus n'est pas atteint, le procédé bloque le paquet P et repasse à l'étape E0, en attente de réception d'un paquet.

Si l'ensemble des critères est atteint, on vérifie dans une étape E23, s'il s'agit d'un message de réponse à une demande d'enregistrement. Si ce n'est pas le cas, le procédé bloque le paquet P. Il vérifie s'il existe un contexte d'enregistrement temporaire et le cas échéant, le supprime. Il repasse à l'étape E0, en attente de réception d'un paquet.

Si c'est le cas, c'est-à-dire s'il s'agit d'un message de réponse à une demande d'enregistrement, on vérifie dans une étape E24 s'il existe un contexte 50 d'enregistrement temporaire, comprenant l'identifiant d'accès réseau NAI extrait du message de réponse à une demande d'enregistrement.

S'il n'existe pas de contexte d'enregistrement temporaire associé au terminal et comprenant l'identifiant d'accès réseau extrait, on bloque le paquet et le procédé repasse à l'étape E0 en attente de réception d'un paquet.

S'il existe un contexte 50 d'enregistrement temporaire associé au terminal et comprenant l'identifiant d'accès réseau extrait, on vérifie dans une étape E25, s'il s'agit d'un message de réponse avec succès, noté "Registration Reply", comprenant dans le champ Code la valeur 0 ou 1, pour le service de gestion de la mobilité.

Si la réponse est négative, c'est-à-dire si le message "Registration Reply" comprend dans le champ Code une valeur différente de 0 ou de 1, on détruit dans une étape E26 le contexte d'enregistrement temporaire associé au terminal et on passe à une étape E32 de transmission du paquet vers le réseau de communication 1.

Si la réponse est positive, dans une étape E27 d'association d'un contexte d'enregistrement 50 au terminal, on extrait du message de réponse à la demande d'enregistrement une durée de vie TTL de l'enregistrement et on la mémorise dans le contexte d'enregistrement 50 associé au terminal. On mémorise également, si cette information n'est pas déjà présente dans le contexte d'enregistrement, l'adresse HoA du terminal 20 en déplacement dans le réseau d'origine 3, comprise dans le message de réponse. En effet, dans certaines formes de réalisation permettant de limiter le nombre d'adresses dans le réseau d'origine 3 nécessaires au service, l'adresse HoA dans le réseau d'origine 3 est allouée par l'agent mère lors de la réponse à une demande d'enregistrement. Le contexte d'enregistrement 50 est alors définitivement associé au terminal 20 en déplacement. Il est représenté sur la figure 2 et comprend :
- un identifiant 52 d'accès réseau NAI ;
- une adresse 54 HoA du terminal 20 en déplacement dans le réseau d'origine 3;
- une adresse temporaire 56 CoA du terminal 20 en déplacement dans le réseau visité 2 ;
- une durée de vie 58 TTL.

Dans une étape E28, on crée deux règles spécifiques associées au terminal 20 en déplacement, appelées R2 et R3 et telles que représentées sur la figure 3, de durée de vie égale à celle du contexte d'enregistrement 50.

La première règle spécifique R2 vise à autoriser les paquets encapsulés comprenant une adresse source égale à l'adresse temporaire CoA du terminal 20 en déplacement et à destination de l'agent mère 32 identifié par son adresse IP, notée "IP HA". A titre d'exemple, on se place ici dans le cas particulier où le mode d'encapsulation est IPinIP. Ce mode d'encapsulation est défini lors de la phase d'enregistrement. D'autres modes d'encapsulation sont également possibles tels que IPinUDP, GRE (pour "Generic Routing Encapsulation"), le mode IPinIP correspondant au mode par défaut.

Une règle R2r réciproque vise à autoriser le trafic dans l'autre sens.

La deuxième règle spécifique R3 vise à autoriser les paquets à destination de l'adresse HoA du terminal 20 en déplacement dans le réseau d'origine 3. Une règle R3r réciproque vise à autoriser le trafic dans l'autre sens, c'est-à-dire le trafic émis à partir de l'adresse HoA du terminal 20 en déplacement dans le réseau d'origine 2.

Le procédé passe ensuite à l'étape E32 de transmission du paquet vers le réseau de communication 1.

Lors de l'étape E32, le procédé transmet le paquet vers le réseau de communication 1 et repasse à l'étape E0, en attente de réception d'un paquet.

Si lors de l'étape E21, le résultat est négatif, c'est-à-dire que le paquet ne comprend pas un message défini par un protocole donné, le procédé passe ensuite à une étape E29 de test qui est décrite ultérieurement.

A l'issue de ces étapes, la base de règles 110 comprend une règle générique R1 et un ou plusieurs couples de règles (R2, R3) de durée de vie limitée, associés à des terminaux en situation de mobilité et enregistrés avec succès auprès du service de gestion de la mobilité.

Le procédé comprend également une tâche de fond, non représentée sur les figures 4 et 5, visant à supprimer de la base de règles 110, les règles spécifiques R2, R3 dont la durée de vie a expiré.

Nous allons maintenant décrire les étapes de filtrage proprement dites à l'aide de couples de règles (R2, R3) toujours en relation avec les figures 4 et 5. L'étape E12 de filtrage à l'aide de la règle générique R1 a déjà été décrite.

On se place dans un premier temps, lors de l'étape E11, lorsqu'un paquet reçu en provenance du réseau de communication 1 ne comprend pas un message défini par un protocole donné. Dans ce cas, le procédé passe à une étape E15 de test.

Dans cette étape E15, on vérifie si le paquet correspond à des données encapsulées. Si tel est le cas, on vérifie dans une étape E17 :
- si l'adresse de destination contenue dans le paquet est égale à l'adresse IP de l'agent mère 32, et
- si l'adresse source contenue dans le paquet est égale à une adresse temporaire CoA d'une règle R2 appartenant à l'ensemble des règles R2 valides.

Si le paquet n'est pas à destination de l'agent mère 32, le procédé bloque le paquet.

S'il n'existe pas de règle R2, telle que l'adresse source du paquet soit égale à l'adresse temporaire CoA mémorisée dans la règle, le procédé bloque le paquet.

Dans ces deux cas, le procédé retourne à l'étape E0, en attente de réception d'un paquet.

S'il existe une règle R2, telle que l'adresse source du paquet est égale à une adresse temporaire d'un terminal enregistré auprès de l'agent mère 32, le procédé passe alors à l'étape E18, déjà décrite, de transmission du paquet à l'agent mère 32.

Si à l'étape E15, le paquet ne correspond pas à des données encapsulées, on vérifie dans une étape E16, si l'adresse source contenue dans le paquet est égale à une adresse HoA dans le réseau d'origine d'une règle R3 appartenant à l'ensemble des règles R3 valides.

S'il n'existe pas de règle R3, telle que l'adresse source du paquet soit égale à l'adresse dans le réseau d'origine HoA, le procédé bloque le paquet et le procédé retourne à l'étape E0, en attente de réception d'un paquet.

S'il existe une règle R3, telle que l'adresse source du paquet est égale à une adresse HoA dans le réseau d'origine d'un terminal enregistré auprès de l'agent mère 32, le procédé passe alors à l'étape E18, déjà décrite, de transmission du paquet à l'agent mère 32.

On se place dans un deuxième temps, lors de l'étape E21, lorsqu'un paquet reçu en provenance de l'agent mère 32 ne comprend pas un message défini par un protocole donné. Dans ce cas, le procédé passe à une étape E29 de test.

Toutefois, ces étapes ne visent pas à protéger l'agent mère 32 et sont optionnelles.

Dans cette étape E29, on vérifie si le paquet correspond à des données encapsulées, "IPinIP". Si tel est le cas, on vérifie dans une étape E31 :
- si l'adresse source contenue dans le paquet est égale à l'adresse IP de l'agent mère 32, et
- si l'adresse de destination contenue dans le paquet est égale à une adresse temporaire CoA d'une règle R2r appartenant à l'ensemble des règles R2r valides.

Si le paquet n'est pas émis par l'agent mère 32, le procédé bloque le paquet.

S'il n'existe pas de règle R2r, telle que l'adresse de destination du paquet soit égale à l'adresse temporaire CoA, le procédé bloque le paquet.

Dans ces deux cas, le procédé retourne à l'étape E0, en attente de réception d'un paquet.

S'il existe une règle R2r, telle que l'adresse de destination du paquet est égale à une adresse temporaire d'un terminal enregistré auprès de l'agent mère 32, le procédé passe alors à l'étape E32, déjà décrite, de transmission du paquet au réseau de communication 1.

Si dans l'étape E29, le paquet ne correspond pas à des données encapsulées, on vérifie dans une étape E30, si l'adresse de destination contenue dans le paquet est égale à une adresse dans le réseau d'origine HoA d'une règle R3r appartenant à l'ensemble des règles R3r valides.

S'il n'existe pas de règle R3r, telle que l'adresse de destination du paquet soit égale à l'adresse dans le réseau d'origine HoA, le procédé bloque le paquet et le procédé retourne à l'étape E0 en attente de réception d'un paquet.

S'il existe une règle R3r, telle que l'adresse de destination du paquet est égale à une adresse dans le réseau d'origine HoA d'un terminal enregistré auprès de l'agent mère 32, le procédé passe alors à l'étape E32, déjà décrite, de transmission du paquet au réseau de communication 1.

De manière similaire au fonctionnement décrit pour un enregistrement d'un terminal 20 en déplacement, lorsque celui-ci envoie une demande de suppression de son enregistrement et que cette demande est acceptée par l'agent mère 32, le contexte d'enregistrement 50 associé au terminal 20 est supprimé et les règles spécifiques correspondantes sont supprimées de la base de règles 110.

Si le terminal 20 en déplacement envoie une demande de renouvellement de son enregistrement et que celui-ci échoue, le contexte d'enregistrement 50 associé au terminal 20 est supprimé et les règles spécifiques correspondantes sont supprimées de la base de règles 110.

La figure 6 représente un schéma bloc fonctionnel d'une entité 100 de filtrage de paquets en provenance d'un réseau de communication pour la mise en oeuvre du procédé selon un mode particulier de réalisation.

L'entité 100 de filtrage de paquets en provenance d'un réseau de communication, destinée à protéger une plateforme de service 32, comprend:
- une base de règles 110, mémorisant des règles de filtrage;
- un module 102 de communication, agencé pour recevoir des paquets en provenance du réseau de communication 1 ou de la plateforme de service 32 et pour envoyer des paquets vers le réseau de communication 1 ou la plateforme de service 32 ;
- un module 104 d'association d'un contexte d'enregistrement à un terminal, suite à un enregistrement réussi du terminal auprès de plateforme de service 32, le contexte comprenant des informations d'enregistrement transmises entre le terminal et la plateforme de service durant l'enregistrement ;
- un module 106 de création d'au moins une règle de filtrage à partir du contexte d'enregistrement, ladite règle visant à bloquer les paquets ne satisfaisant pas au moins une partie des informations d'enregistrement ;
- un module 108 de filtrage des paquets en fonction de règles créées.
   De façon optionnelle, le module 108 de filtrage des paquets est également agencé pour bloquer des messages définis par un protocole donné à destination de la plateforme de service comprenant un identifiant de service non valide.
   Les modules 104, 106 et 108 sont agencés pour mettre en oeuvre le procédé précédemment décrit. Il s'agit de préférence de modules logiciels comprenant des instructions logicielles pour faire exécuter les étapes du procédé précédemment décrit, mises en oeuvre par l'entité de filtrage. L'invention concerne donc aussi
- un programme pour une entité de filtrage de paquets en provenance d'un réseau de communication, comprenant des instructions de code de programme destinées à commander l'exécution des étapes du procédé, lorsque le programme est exécuté par l'entité, et
- un support d'enregistrement lisible par un dispositif sur lequel est enregistré le programme pour une entité de filtrage de paquets.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système 34 de fourniture de service comprenant :
- une plateforme 32 de service, agencée pour fournir un service à des terminaux d'un réseau d'origine, et
- une entité 30 de filtrage telle que décrite ci-dessus, agencée pour recevoir des paquets en provenance d'un réseau de communication et les filtrer avant transfert à la plateforme de service.

Le procédé a été décrit dans le cas particulier où le réseau visité 2 ne comprend pas d'agent étranger FA. Il est aisément transposable au cas où le réseau visité 2 comprend un agent étranger FA.

Le procédé a été décrit dans le cas particulier de la protection d'une plateforme de service de gestion de la mobilité de terminaux IP. Il est également applicable à d'autres services, tels que la fourniture de services multimédias, des services d'authentification.

A titre d'exemple, pour la fourniture d'un service multimédia de type IMS "IP Multimedia Subsystem"), la règle R1 générique consiste à bloquer les demandes d'enregistrement SIP-Register auprès du service dans lesquelles le terminal ne s'identifie pas à l'aide d'un identifiant de service SIP URI, pour "Uniform Resource Identifier", tel que défini dans la RFC 2396, valide. Une règle spécifique consiste alors à bloquer les paquets qui ne sont pas en provenance d'une adresse IP source d'un terminal enregistré. Le message SIP-Register comprend un champ Contact, comprenant lui-même l'adresse IP source du terminal et une durée de vie de l'enregistrement.

Toujours à titre d'exemple, pour un service d'authentification de type EAP, pour "Extensible Authentication Protocol" IEEE 802.1x, tels que EAP-SIM (EAP Subscriber Identity Module) et EAP-AKA (EAP Authentication and Key Agreement), le terminal s'identifie à l'aide d'un identifiant de service de type NAI, basé sur l'identité international de l'utilisateur (IMSI International Mobile Subscriber Identity). Cet identifiant est échangé dès la première phase d'authentification EAP. La phase EAP se termine par la réception d'un message EAP Success en cas de réussite ou EAP Failure en cas d'échec. On peut donc également définir une règle générique basée sur l'identifiant de service. En cas de succès de l'authentification, l'adresse IP de l'utilisateur est obtenue par DHCP, ainsi qu'une durée de vie (Lease Time DHCP). On peut ainsi définir une règle de filtrage spécifique visant à bloquer les paquets qui ne sont pas émis à partir d'une adresse IP d'un utilisateur authentifié.

## Revendications

1. Procédé de filtrage de paquets en provenance d'un réseau (1) de communication, comprenant, suite à un enregistrement (E25) réussi d'un terminal (20) auprès d'une plateforme de service (32) :
- une étape (E27) d'association d'un contexte d'enregistrement (50) au terminal, le contexte comprenant des informations d'enregistrement transmises entre le terminal et la plateforme de service durant l'enregistrement ;
- une étape (E28) de création d'au moins une règle (R2, R3) de filtrage à partir du contexte d'enregistrement, ladite règle visant à bloquer les paquets ne satisfaisant pas au moins une partie des informations d'enregistrement;
- une étape (E15-E17) de filtrage des paquets en fonction de la règle créée.

2. Procédé de filtrage selon la revendication 1, comprenant en outre, préalablement à l'étape de filtrage des paquets en fonction de la règle créée, une étape (E12) de filtrage, dans laquelle on bloque des messages définis par un protocole donné à destination de la plateforme de service comprenant un identifiant de service non valide.

3. Procédé de filtrage selon l'une quelconque des revendications précédentes, dans lequel, une durée de vie (TTL) associée à l'enregistrement auprès de la plateforme de service est associée à la règle de filtrage créée, à l'issue de laquelle ladite règle est supprimée.

4. Procédé de filtrage selon l'une quelconque des revendications précédentes, dans lequel la plateforme de service gère une mobilité d'au moins un terminal appartenant à un réseau d'origine (3) vers des réseaux visités (2, 4) et le contexte d'enregistrement comprend une adresse du terminal (54) dans le réseau d'origine, ladite étape de création d'une règle (R3) de filtrage visant à bloquer les paquets non émis à partir de l'adresse du terminal dans le réseau d'origine.

5. Procédé de filtrage selon la revendication 4, dans lequel, le contexte d'enregistrement comprenant en outre une adresse temporaire (56) du terminal dans un réseau visité, on crée une autre règle (R2) de filtrage à partir du contexte d'enregistrement, ladite autre règle visant à bloquer les paquets encapsulés ne comprenant pas en tant qu'adresse source l'adresse temporaire du terminal.

6. Entité (100) de filtrage de paquets en provenance d'un réseau de communication, destinée à protéger une plateforme de service (32), comprenant :
- des moyens (104) d'association d'un contexte d'enregistrement à un terminal, suite à un enregistrement réussi du terminal auprès de la plateforme de service, le contexte comprenant des informations d'enregistrement transmises entre le terminal et la plateforme de service durant l'enregistrement ;
- des moyens (106) de création d'au moins une règle de filtrage à partir du contexte d'enregistrement, ladite règle visant à bloquer les paquets ne satisfaisant pas au moins une partie des informations d'enregistrement ;
- des moyens (108) de filtrage des paquets en fonction de règles créées.

7. Système (34) de fourniture de service comprenant :
- une plateforme (32) de service, agencée pour fournir un service à des terminaux d'un réseau d'origine, et
- une entité (30) de filtrage selon la revendication 6, agencée pour recevoir des paquets en provenance d'un réseau de communication et les filtrer avant transfert à la plateforme de service.

8. Programme pour une entité de filtrage de paquets en provenance d'un réseau de communication, comprenant des instructions de code de programme destinées à commander l'exécution des étapes du procédé selon l'une des revendications 1 à 5, lorsque ledit programme est exécuté par ladite entité.

9. Support d'enregistrement lisible par une entité sur lequel est enregistré le programme selon la revendication 8.
